Europäisches Patentamt

European Patent Office

Office européen des brevets

(19)

(11)     EP 0 663 735 B1

(12)     **EUROPEAN PATENT SPECIFICATION**

(45) Date of publication and mention
of the grant of the patent:
**20.10.2004   Bulletin 2004/43**

(51) Int Cl.⁷: $H04B\ 1/66$, $G10L\ 19/02$

(21) Application number: **95300168.2**

(22) Date of filing: **12.01.1995**

(54) **Synthesis subband filter**

Teilbandsynthesefilter

Filtre de synthèse en sous bandes

(84) Designated Contracting States:
**DE FR GB IT NL**

(30) Priority:   **14.01.1994   KR 9400625**

(43) Date of publication of application:
**19.07.1995   Bulletin 1995/29**

(73) Proprietor: **LG ELECTRONICS INC.**
**Seoul (KR)**

(72) Inventors:
• **Hwang, Sung Bae**
**Seoul (KR)**
• **Rim, Chai Yeol**
**Seoul (KR)**

(74) Representative:
**Cross, Rupert Edward Blount et al**
**BOULT WADE TENNANT,**
**Verulam Gardens**
**70 Gray's Inn Road**
**London WC1X 8BT (GB)**

(56) References cited:
**EP-A- 0 484 595          EP-A- 0 661 827**

• **MATURI G: "SINGLE CHIP MPEG AUDIO
DECODER" IEEE TRANSACTIONS ON
CONSUMER ELECTRONICS,US,IEEE INC. NEW
YORK, vol. 38, no. 3, 1 August 1992 (1992-08-01),
pages 348-355, XP000311864 ISSN: 0098-3063**

**Description**

BACKGROUND OF THE INVENTION

1. Field of the Invention

The present invention relates to a synthesis subband filter, and more particularly to a synthesis subband filter for decoding a digital audio signal.

2. Description of the Prior Art

There are several methods for coding a digital audio signal, in which a motion picture expert group (MPEG) employs a method for differing the quantization level in accordance with the properties per output signal of respective subbands through subband filters.

The digital audio signal coded as mentioned above is subjected to an inverse quantization to be restored into the original audio signal via a synthesis subband filter.

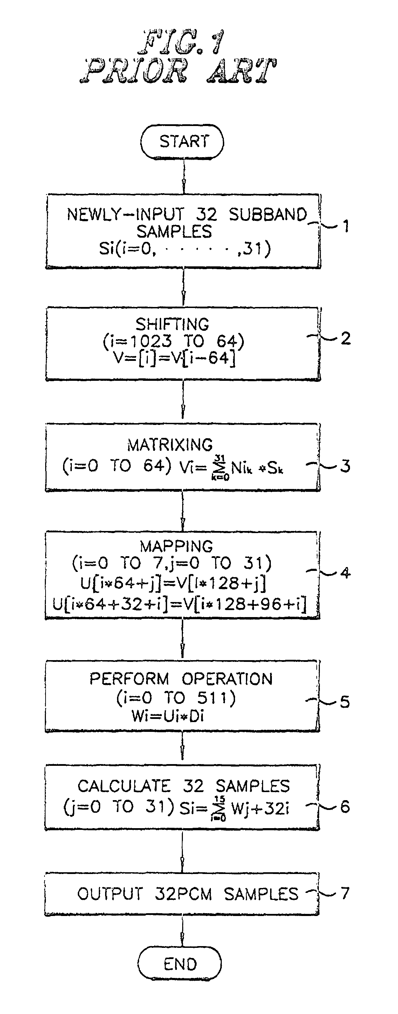

FIG. 1 is a flowchart illustrating the operational process of a general synthesis subband filter.

When a band-pass filter is used to compressively code an audio signal, a synthesis filter must be formed to restore the audio signal.

The general restoration process stipulated by the MPEG will be described with reference to FIG. 1.

To begin with, 32 new subband samples Si (where i = 0, 1,..., 31) are newly-received (step 1).

Using the received 32 subband samples Si, a matrixing value Vi is shifted by 64s (step 2), which can be written as:

$$Vi = V [i - 64] \tag{1}$$

where i is a number from 1023 to 64.

After the shifting, the matrixing value Vi is calculated as below (step 3):

$$Vi = \sum_{k=0}^{31} Nik * Sk \quad \dots\dots\dots\dots\dots \quad (2)$$

where i is a number from 0 to 63, so that 64 matrixing values Vi are formed.

After the matrixing, a mapping is performed to form a mapping value Ui as defined in equations (3) and (4).

$$U[i * 64 + j] = V[i * 128 + j] \tag{3}$$

$$U[i * 64 + 32 + 1] = V[i * 128 + 96 + i] \tag{4}$$

where the mapping value Ui is obtained such that i is a number from 0 to 7, and j is a number from 0 to 31. Then, an operational process is carried to give an operational value Wi as expressed in the following equation (step 5). That is,

$$Wi = Ui * Di \tag{5}$$

where i numbers 512 from 0 to 511.

Thereafter, 32 sample values Sj are calculated according to the following equation (step 6):

$$Sj = \sum_{i=0}^{15} Wj + 32i \quad \dots\dots\dots\dots\dots\dots \quad (6)$$

where j is a number from 0 to 31.

After the calculation of 32 samples, reconstructed 32 pulse-coded modulation (PCM) samples are supplied (step 7).

In order to restore the audio signal coded according to the above algorithm, a general digital signal processor or microprocessor, a data memory and a program memory is used.

In more detail, when an algorithm to be executed is written on a program memory, a processor decodes the program and reads out a subband-filtered signal on a data memory to perform an operation according to the decoding, and the result is supplied to the data memory, thereby carrying out the synthesis filtering.

However, because the algorithm is conventionally embodied by means of the general processor, many cycles are required for operating to impede high speed processing, which, in turn, necessarily speeds up the clocks received into the processor for conducting a real-time processing.

Therefore, the price of the processor is raised, and further increased when processing a signal of multichannel.

Prior art document, Maturi G: 'Single chip MPEG audio decoder', IEEE Transactions on Consumer Electronics, US, vol.38, no.3,1 August 1992, pp348-355, discloses an audio decoder architecture as set out in the pre-characterising portion of claim 1.

## SUMMARY OF THE INVENTION

Particular embodiments of the present invention are directed to solving the above-described problems. Accordingly, it is an object of these embodiments to provide a subband filter for performing a synthesis subband filtering in high speed and enabling the multichannel processing.

The invention provides a synthesis subband filter as set out in claim 1.

## BRIEF DESCRIPTION OF THE DRAWINGS

The above objects and other advantages of the present invention will become more apparent by describing in detail preferred embodiments thereof with reference to the attached drawings in which:

FIG. 1 is a flow chart illustrating the operational process of a general synthesis subband filter;
FIG. 2 is a construction view showing one embodiment of a synthesis subband filter according to the present invention;
FIG. 3 is a construction view showing another embodiment of the synthesis subband filter according to the present invention;
FIG. 4A is a detailed construction view showing one embodiment of the matrixing value processor of FIGS. 2 and 3;
FIG. 4B is a detailed construction view showing another embodiment of the matrixing value processor of FIGS. 2 and 3;
FIG. 5A is a detailed construction view showing one embodiment of the output sample unit of FIGS. 2 and 3;
FIG. 5B is a detailed construction view showing another embodiment of the output sample unit of FIGS. 2 and 3;
FIG. 6A is a construction view showing the matrixing value processor in case of a multichannel; and
FIG. 6B is a construction showing the output unit in case of the multichannel.

## DETAILED DESCRIPTION OF THE PREFERRED EMBODIMENTS

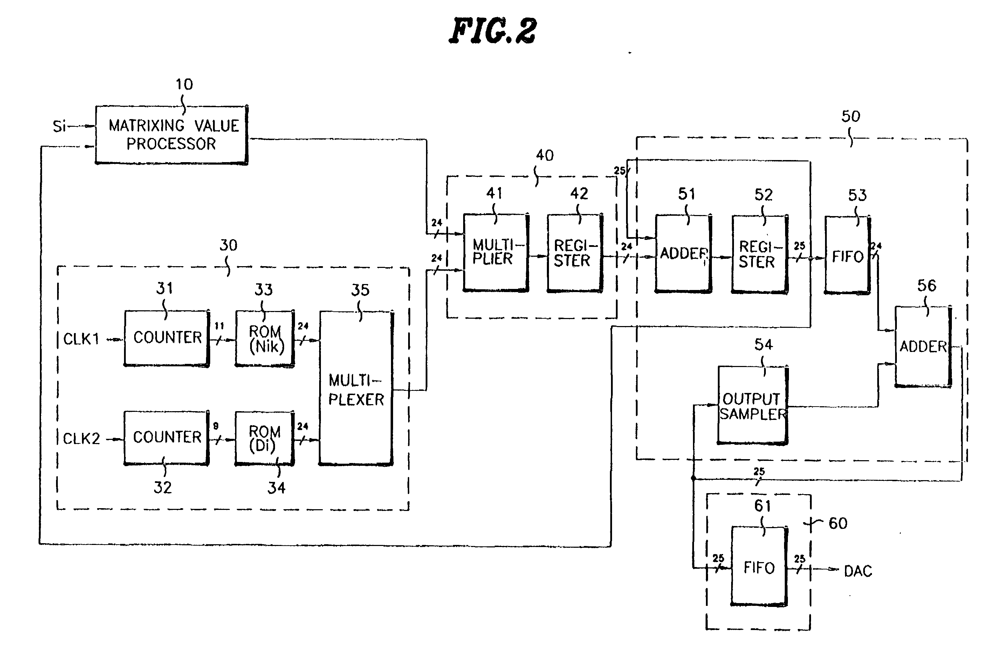

Referring FIG. 2, one embodiment of a synthesis subband filter will be described in detail.

The synthesis subband filter shown in FIG. 2, includes a matrixing value processor 10, a first register (not shown), a constant storing unit 30, a multiplication operator 40, an addition operator 50 and an output unit 60.

The matrixing value processor 10 obtains a shifted matrixing value Vi and a mapping value Ui as expressed by equations (7), (8) and (9) by means of 32 matrixing values V and subband samples Si from the addition operator 50, that is:

$$Vi = V[i - 64] \qquad (7)$$

where i is a constant from 1023 to 64.

$$U[i * 64 + j] = V[i * 128 + j] \qquad (8)$$

$$U[i * 64 + 32 + i] = V[i * 128 + 96 + i] \tag{9}$$

where i is a constant from 0 to 7, and j is a constant from 0 to 31.

The first register temporarily stores the output of the matrixing value processor 10 to be in tune with timing.

The constant storing unit 30 stores a matrixing constant value Nik and an operational constant value Di, and supplies the stored constant values Nik and Di to the multiplication operator 40.

The constant storing unit 30 is formed of two counters 31 and 32, two ROMs 33 and 34, and a multiplexer 35.

The counter 31 counts a clock CLK1 as an input thereof to output the counted clock to the ROM 33.

The ROM 33 stores the preset matrixing constant value Nik, and sequentially supplies the stored matrixing constant value Nik in accordance with the output of the counter 31.

The counter 32 counts a clock CLK2 as an input thereof to output the counted clock to the ROM 34.

The ROM 34 stores the preset operational constant value Di, and sequentially supplies the stored operational constant value Di in accordance with the output of the counter 32.

The multiplexer 35 selectively receives the matrixing constant value Nik from the ROM 33 or the operational constant value Di from the ROM 34 to supply the selected value to the multiplication operator 40.

The clock CLK1 allows the counter 31 to count to sequentially supply the matrixing constant value Nik stored in the ROM 33, and the clock CLK2 allows the counter 32 to count to sequentially supply the operational constant value Di stored in the ROM 34.

The matrixing constant value Nik and operational constant value Di from the ROMs 33 and 34 are selected by the multiplexer 35 to be supplied to the multiplication operator 40.

In other words, the multiplexer 35 selects the output of the ROM 33 to provide the matrixing constant value Nik to the multiplication operator 40 when the multiplication operator 40 conducts the multiplication for matrixing; otherwise it selects the output of the ROM 34 to provide the operational constant value Di when the multiplication operator 40 conducts the multiplication.

More specifically, the multiplexer 35 selects the output of the ROM 33 when the operation defined in the following equation (10) is performed, or the output of the ROM 34 when performing the operation defined in equation (11):

$$Ak = Nik * Sk \tag{10}$$

$$Wi = Ui * Di \tag{11}$$

The multiplication operator 40 carries out the multiplication by means of a subband sample Sk from the first register and the matrixing constant value Nik from the constant storing unit 30. Also, it carries out the multiplication as expressed in equations (12) and (13) by means of the mapping value Ui from the first register and the operational constant value Di from the constant storing unit 30.

$$Ak = Nik * Sk \tag{12}$$

where k is a constant from 0 to 31, and

$$Wi = Ui * Di \tag{13}$$

where i is a constant from 0 to 511.

The multiplication operator 40 is formed of a multiplier 41 and a register 42.

The multiplier 41 conducts the multiplication operation as expressed in equations (14) and (15) by means of the subband sample Sk and mapping value Ui from the matrixing value processor 10 via the first register and the constant value Nik or Di from the multiplexer 35 of the constant storing unit 30.

$$Ak = Nik * Sk \tag{14}$$

where k is a constant from 0 to 31, and

$$Wi = Ui * Di \qquad (15)$$

where i is a constant from 0 to 511.

The register 42 temporarily stores data from the multiplier 41.

The subband sample Sk from the matrixing value processor 10 via the first register and the matrixing constant value Nik from the multiplexer 35 of the constant storing unit 30 are multiplied in accordance with the following equation (16) in the multiplier 41, that is:

$$Ak = Nik * Sk \qquad (16)$$

where k is a constant from 0 to 31.

In addition to this, the mapping value Ui from the matrixing value processor 10 via the first register and the operational constant value Di from the multiplexer 35 of the constant storing unit 30 are multiplied in accordance with the following equation (17) in the multiplier 41, that is:

$$Wi = Ui * Di \qquad (17)$$

where i is a constant from 0 to 511.

The data subjected to the multiplication operation in the multiplier 41 is temporarily stored in the register 42 prior to being output.

The addition operator 50 adds the operational values from the multiplication operator 40 to complete the matrixing operation and sample calculation as equations (18) and (19) below:

$$Vi = \sum_{k=0}^{31} Nik * Sk \quad \dots\dots\dots\dots\dots \quad (18)$$

where i is a constant from 0 to 63, and

$$Sj = \sum_{k=0}^{15} Wj + 32i \quad \dots\dots\dots\dots\dots \quad (19)$$

where j is a constant from 0 to 31.

The matrixing operation and 32 sample calculation are carried out as described above.

The addition operator 50 is formed of two adders 51 and 56, a register 52, an output sampler 54, and a FIFO 53.

The adder 51 passes intact the multiplied operation value Wi from the register 42 of the multiplication operator 40, and cumulatively adds the multiplied operational value Ak from the register 42 of the multiplication operation 40 to supply the matrixing values Vi as specified in equations (20) and (21).

$$Vi = \sum_{k=0}^{31} Ak \quad \dots\dots\dots\dots\dots \quad (20)$$

$$Vi = \sum_{k=0}^{31} Nik * Sk \quad \dots\dots\dots\dots\dots \quad (21)$$

where i is a constant from 0 to 63.

The register 52 supplies the values added in the adder 51 to the adder 51 to repeat the cumulative addition.

The matrixing value Vi cumulatively added in the adder 51 to be supplied to the register 52 is provided to the FIFO 53 and the matrixing value processor 10.

The FIFO 53 stores the multiplied operation value Wi unchanged even passing through the adder 51 and register 52, and supplies the unchanged value to the adder 56.

The adder 56 cumulatively adds the multiplied operation value Wi stored in the FIFO 53 to output 32 subband samples Sj which is written as:

$$Sj = \sum_{i=0}^{15} Wj + 32i \quad \ldots\ldots\ldots\ldots \quad (22)$$

where j is a constant from 0 to 31.

The output sampler 54 stores an intermediately-calculated value of the subband sample from the adder 56.

The multiplied operation value Ak from the register 42 of the multiplication operator 40 is primarily added with zero, stored in the register 52, and again supplied to the adder 51 to be continuously and cumulatively added through the adder 51 and register 52, so that the matrixing value Vi is produced as equation (23):

$$Vi = \sum_{k=0}^{31} Nik \neq Sk \quad \ldots\ldots\ldots\ldots \quad (23)$$

where i is a constant from 0 to 63.

The cumulatively added matrixing value Vi is provided to the matrixing value processor 10.

The multiplied operation value Wi from the register 42 of the multiplication operator 40 passes through the adder 51 and register 52 intact prior to being stored in the FIFO 53, and cumulatively added through the adder 56 and output sampler 54, so that the subband sample Sj is produced as:

$$Sj = \sum_{i=0}^{15} Wj + 32i \quad \ldots\ldots\ldots\ldots \quad (24)$$

where j is a constant from 0 to 31.

In more detail, the multiplied operation value Wi from the register 42 of the multiplication operator 40 is stored in the FIFO 53 and is primarily added with zero in the adder 56. Then, the result is repeatedly supplied to the adder 56 via the output sampler 54 to continuously and cumulatively added via the adder 56, output sampler 54 and FIFO 53, finally supplying the subband sample Sj.

The output unit 60 consists of a FIFO 61 to store 32 subband samples Sj finally supplied from the adder 56 of the addition operator 50 to provide the stored subband samples Sj to a digital/analog converter DAC.

The previous 32 subband samples Si are temporarily stored in the matrixing processor 10 to be multiplied in the multiplication operator 40 by the matrixing constant value Nik from the constant storing unit 30, and cumulatively added in the adder 51 of the addition operator 50 to supply the matrixing value Vi to the matrixing value processor 10.

The matrixing value Vi from the adder 51 of the addition operator 50 is shifted and mapped in the matrixing value processor 10 to be output as the mapping value Ui.

The mapping value Ui from the matrixing value processor 10 is multiplied by the operational constant value Di from the constant storing unit 30, and cumulatively added in the adder 56 of the addition operator 50 to be output as 32 subband samples Sj via the output unit 60.

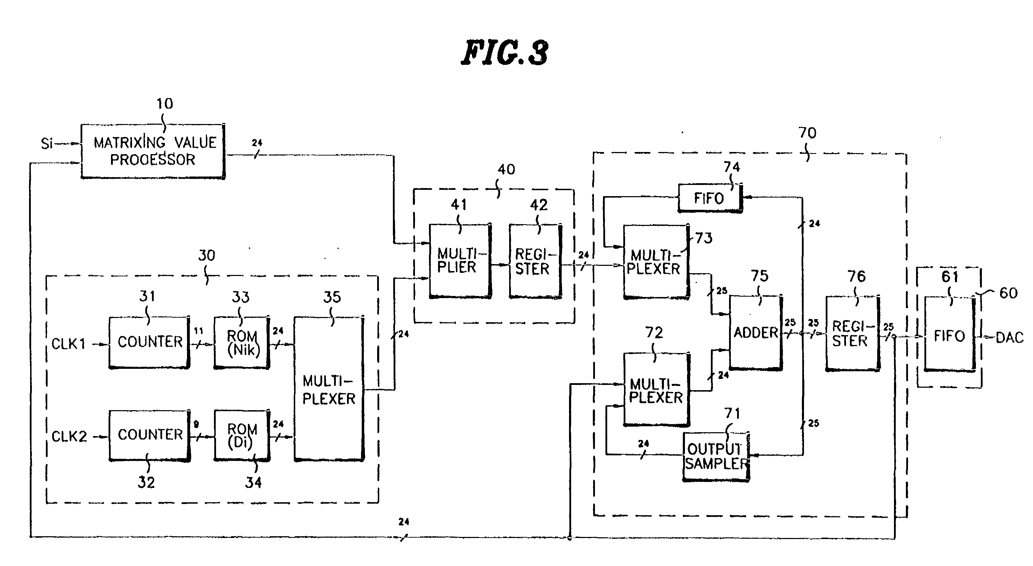

FIG. 3 is a construction view showing another embodiment of the synthesis subband filter which includes a matrixing value processor 10, a constant storing unit 30, a multiplication operator 40, an addition operator 70 and an output unit 60.

Since the operation and construction of the matrixing value processor 10, constant storing unit 30, multiplication operator 40 and output unit 60 are the same as those of one embodiment of the synthesis subband filter shown in FIG. 2, only the construction and operation of the addition operator 70 will be described in detail.

The addition operator 70 adds the operational values from the multiplication operator 40 to complete the matrixing operation and sample calculation in accordance with the following equations (25) and (26):

$$Vi = \sum_{k=0}^{31} Nik \cdot Sk \ldots\ldots\ldots\ldots (25)$$

where i is a constant from 0 to 63, and

$$Sj = \sum_{i=0}^{15} Wj + 32i \ldots\ldots\ldots\ldots (26)$$

where j is a constant from 0 to 31.

The matrixing operation and 32 sample calculation are carried out as described above.

The addition operator 70 is formed of two multiplexers 72 and 73, an adder 75, an output sampler 71, a FIFO 74 and a register 76.

The multiplexers 72 and 73 serve for temporally multiplexing the operations of the matrixing value Vi and subband sample Sj.

The multiplexer 73 selects the multiplied operation value Ak or Wi from the register 42 of the multiplication operator 40 to provide the selected value to the adder 75.

The adder 75 cumulatively operates the multiplied operation value Wi and the multiplied operational value Ak both from the multiplexer 73, respectively, to output the matrixing value Vi and subband sample Sj.

The FIFO 74 stores the multiplied operation value Wi from the multiplexer 73 to again supply the stored value to the multiplexer 73.

The output sampler 71 stores the intermediately-calculated value of the subband sample from the adder 75 to supply the stored value to the multiplexer 72 in tune with timing.

The register 76 stores the matrixing value Vi cumulatively added in the adder 75 to supply the stored value to the multiplexer 72, and supplies the finally-output matrixing value Vi to the matrixing value processor 10. Also, 32 subband samples Sj cumulatively added in the adder 75 prior to being finally output are stored in the register 76 to be supplied to the output unit 60.

The multiplexer 72 selects the intermediately-calculated subband sample from the register 76 and output sampler 71 and the intermediately-calculated matrixing value from the register 76 to produce the selected value to the adder 75.

First, in case that the 32 subband samples Sj are calculated, the multiplied operation value Wi from the register 42 of the multiplication operator 40 is selected by the multiplexer 73, added with zero in the adder 75, stored in the output sampler 71, and then stored in the output sampler 71 to be supplied to the multiplexer 72.

Also the multiplied operation value Wi from the register 42 of the multiplication operator 40 passes through the adder 75 intact to be stored in the FIFO 74, and is supplied to the adder 75 via the multiplexer 73.

The intermediately-calculated value of the subband sample from the output sampler 71 is input to be selected in the multiplexer 72 and output to the adder 75 to be cumulatively added to the multiplied operation value Wi of the FIFO 74 selected by the multiplexer 73 as below:

$$Sj = \sum_{i=0}^{15} Wj + 32i \ldots\ldots\ldots\ldots (27)$$

where j is a constant from 0 to 31.

The finally-output subband sample Sj having been cumulatively added in the adder 75 is stored in the register 76 to be supplied to the output unit 60.

Second, in case that the matrixing value Vi is calculated, the multiplied operation value Ak from the register 42 of the multiplication operator 40 is selected by the multiplexer 73 to be primarily added with zero, stored in the register 76 to be provided to the multiplexer 72.

The multiplied operation value Ak from the register 42 of the multiplication operator 40 is received via the multiplexer 73, and cumulatively added with the previously-added multiplied operation value from the adder 75 to the multiplexer 72 as defined in the following equation (28):

$$Vi = \sum_{i=0}^{31} Nik \cdot Sk \quad \ldots\ldots\ldots\ldots\ldots \quad (28)$$

where i is a constant from 0 to 63.

The finally-output matrixing value Vi having been added in the adder 75 is produced to the matrixing value processor 10 via the register 76.

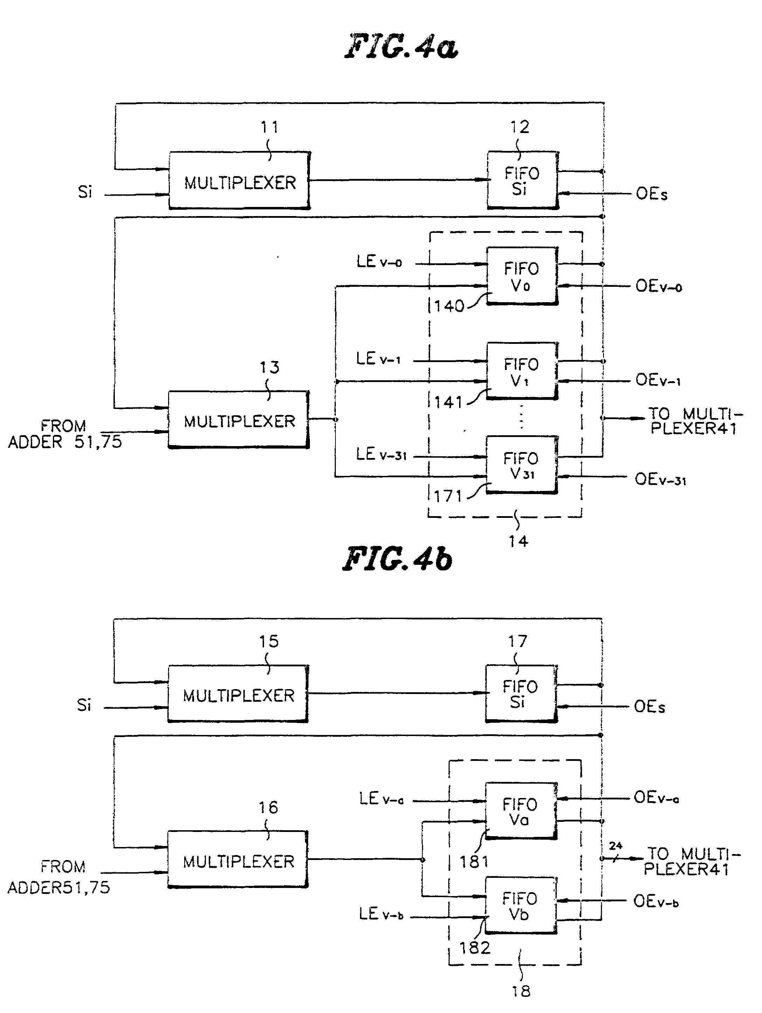

FIG. 4A is a detailed construction view showing one embodiment of the matrixing value processor 10 of FIGS. 2 and 3, and FIG. 4B is a detailed construction view showing another embodiment of the matrixing value processor 10.

The matrixing value processor 10 which utilizes a multiple FIFO, as illustrated in FIG. 4A, includes two multiplexers 11 and 13, a FIFO 12 for storing the subband sample Si, and multiple FIFO 14 consisting of 32 FIFOs 140 to 171 for storing the matrixing value Vi.

The multiplexer 11 selects the subband sample from the FIFO 12 and newly-received subband sample Si to supply the selected sample to the FIFO 12.

The FIFO 12 stores the subband sample Si from the multiplexer 11, and provides the stored subband sample Si in accordance with a subband sample output enable signal $OE_S$ to the multiplier 41 via the first register.

The multiplexer 13 selects the matrixing value Vi from the multiple FIFO 14 or the matrixing value Vi from the adder 51 or 75 of the addition operator 50 or 70 to output the selected value to the multiple FIFO 14.

The multiple FIFO 14 formed by the plurality of FIFOs 140 to 171 connected in parallel to one another stores the matrixing value Vi from the multiplexer 13 in response to matrixing value latch enable signal $LE_{V-0}$ to $LE_{V-31}$, and supplies the stored matrixing value Vi to the multiplier 41 of the multiplication operator 40 in response to matrixing value latch enable signals $OE_{V-0}$ to $OE_{V-31}$.

Since the matrixing value Vi is mapped to the mapping value Ui in 32-sample unit by means of a sequential access of the multiple FIFO 14, the multiple FIFO 14 is formed of 32 FIFOs 140 to 171 capable of storing more than 32 samples.

The matrixing value processor 10 which uses two FIFOs, as illustrated in FIG. 4B, is formed of two multiplexers 15 and 16, a FIFO 17 and a double FIFO 18.

The multiplexer 15 selects the subband sample from the FIFO 17 or newly-received subband sample Si to supply the selected subband sample to the FIFO 17.

The FIFO 17 stores the subband sample Si from the multiplexer 15 to provide the stored subband sample Si in accordance with a subband output enable signal $OE_S$.

The multiplexer 16 selects the matrixing value Vi from the double FIFO 18 or the matrixing value from the adder 51 or 75 of the addition operator 50 or 70 to provide the selected matrixing value to the double FIFO 18.

The double FIFO 18 which is formed by two FIFOs 181 and 182 connected in parallel to each other stores the matrixing value Vi from the multiplexer 16 in accordance with matrixing value latch enable signals $LE_{V-a}$ and $LE_{V-b}$, and supplies the stored matrixing value Vi to the multiplier 41 of the multiplication operator 40 in accordance with matrixing value output enable signals $OE_{V-a}$ and $OE_{V-b}$.

The matrixing value Vi is mapped to be the mapping value Ui by the sequential access of the double FIFO 18. For this reason, the double FIFO 18 can be embodied only by two FIFOs 181 and 182 when the matrixing value Vi is mapped to be the mapping value Ui by 512s.

Provided that the number of subband sample Si is N, the multiple FIFO 14 consists of at least N FIFOs.

More specifically, when 512 mapping values Ui are formed by means of 1024 matrixing values Vi, the matrixing value Vi is mapped to be the mapping value in 32-sample unit, so that the FIFOs constituting the multiple FIFO 14 number at least 32.

If the mapping is performed in M-sample unit, the multiple FIFO is formed by at least M FIFOs. Also, if the sample of the matrixing value Vi numbers K, the multiple FIFO consists of FIFOs numbering K/M and below.

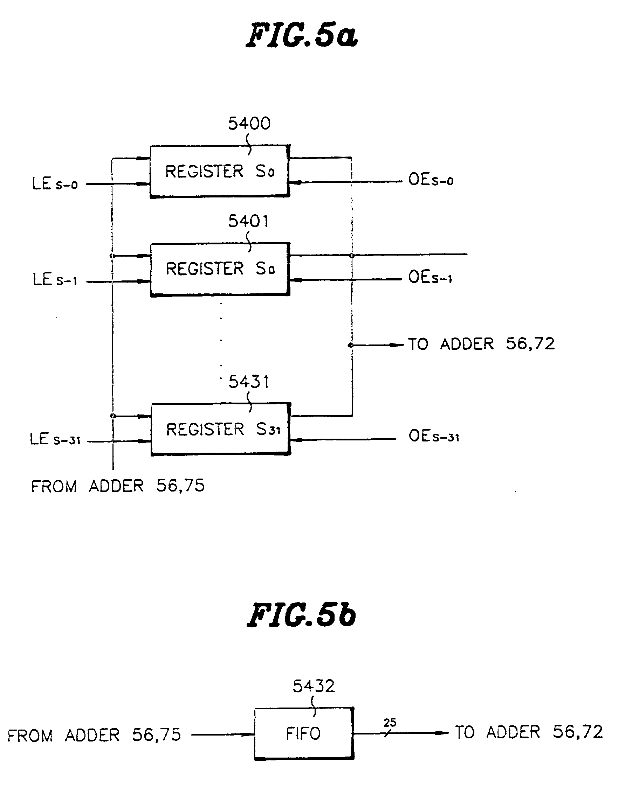

FIG. 5A is a detailed construction view showing one embodiment of the output sample unit 54 or 71 of FIGS. 2 and 3, and FIG. 5B is a detailed construction view showing another embodiment of the output sample unit 54 or 71 of FIGS. 2 and 3.

The output sample unit 54 or 71 by means of the multiple register is formed by 32 registers 5400 to 5431 as shown in FIG. 5A.

Since 32 outputs are formed with respect to newly-received 32 subband sample signals Si, the intermediately-calculated values of the 32 subband samples are stored in 32 registers 5400 to 5431.

The output sample unit 54 or 71 by means of the multiple FIFO is formed by one FIFO 5432 as shown in FIG. 5B.

The intermediately-calculated values of the 32 subband samples are sequentially stored in the FIFO 5432 by using the sequential access of the intermediately-calculated values of the subband samples.

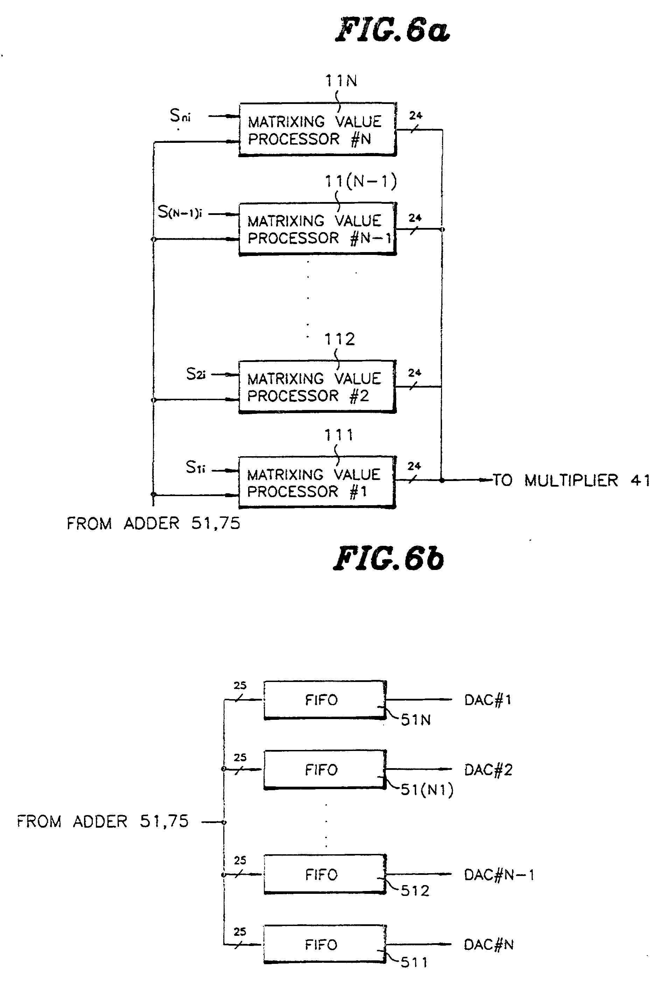

FIG. 6A is a construction view showing the matrixing value processor 10 in case of a multichannel, and FIG. 6B is a construction view showing the output unit shown in FIGS. 2 and 3 in case of the multichannel.

When the synthesis subband filter is applied to the multichannel, as shown in FIGS. 6A and 6B, just the matrixing value processor 10 and output unit 60 can be modified to be used as the matrixing value processor 10.

That is, The matrixing value processor and output unit are connected in parallel to each other according to the number of channels.

When the subband sample signal SNi of each channel is received from the adder 51 or 75, each matrixing value processor 111 to 11N calculates a matrixing value Vni by means of an input subband sample signal Sni as the following equation (29), and supplies the calculated matrixing value Vni to the multiplier 41.

$$Vni = \sum_{k} Nik \not\parallel Snk \dots\dots\dots\dots (29)$$

where n denotes nth channel, Sni is the subband sample signal Si of nth channel, and Vni is the matrixing value Vi of nth channel.

The output unit 60 may be formed by connecting N FIFOs 511 to 51N in parallel to one another since it should store the output values of N channels.

The input and output of the N FIFOs 511 to 51N are individually controlled.

As compared with using the DSP or microprocessor, the synthesis subband filter formed to be operated as above does not require a program memory, reduces the number of cycles needed for obtaining one sample to allow for high speed processing, and operates necessary clocks at a low frequency. Furthermore, a multichannel audio signal is utilized per channel by temporally dividing the filter to apply a single synthesis subband filter to a multichannel audio decoder.

While the present invention has been particularly shown and described with reference to particular embodiment thereof, it will be understood by those skilled in the art that various changes in form and details may be effected therein without departing from the scope of the invention as defined by the appended claims.

### Claims

1.   A synthesis subband filter for an MPEG audio signal decoder, comprising:

matrixing value processing means (10) for obtaining a shifted matrixing value and a mapping value by means of an input subband sample and matrixing value;
constant storing means (30) for storing a matrixing constant value and an operational constant value;
multiplication operating means (40) for performing a multiplication operation by means of data from said matrixing value processing means and constant storing means;
addition operating means (50) for cumulatively adding the operation values from said multiplication operating means to supply said matrixing value and a subband sample; and
output means (60) for supplying said subband sample from said addition operating means,

**characterised in that** the
matrixing value processing means (10) comprises:

a first multiplexer for receiving said subband sample (11,15) ;
FIFO means (12,17) for storing said subband sample from said first multiplexer, and supplying the stored subband sample to said first multiplexer;
a second multiplexer (13,16) for receiving said matrixing value from said addition operating means; and
a plurality of FIFO means (14,18) for storing said matrixing value from said second multiplexer, and supplying the stored matrixing value to said multiplication operating means and second multiplexer.

2.   A synthesis subband filter as claimed in claim 1, wherein said constant storing means (30) comprises:

a first counter (31) for counting a first clock as an input;
a second counter (32) for counting a second clock as an input;

a first ROM (33) for sequentially supplying said stored matrixing constant value in accordance with an output of said first counter;

a second ROM (34) for sequentially supplying said stored operational constant value in accordance with an output of said second counter; and

a multiplexer (35) for selectively supplying the constant values from said first and second ROMs.

3. A synthesis subband filter as claimed in claim 1, wherein said multiplication operating means (40) comprises:

multiplying means (41) for performing the multiplication operation by means of said matrixing value, mapping value and constant values from said matrixing value processing means and constant storing means; and

register means (42) for storing the operation values from said multiplying means.

4. A synthesis subband filter as claimed in claim 1, wherein said addition operating means (50) comprises:

a first adder (51) for cumulatively adding said operation value from said multiplication operating means;

a register (52) for storing an intermediately-calculated operation from said first adder, supplying said intermediately-calculated operation value to said first adder, and supplying the finally-calculated matrixing value to said matrixing value processing means;

FIFO means (53) for storing the operation value from said multiplication operating means;

a second adder (56) for cumulatively adding said operation value from said FIFO means, and supplying the finally-calculated subband sample to said output means; and

output sampling means (54) for storing an intermediately-calculated value of said subband sample from said second adder.

5. A synthesis subband filter as claimed in claim 1, wherein said addition operating means (70) comprises:

a first multiplexer (73) for receiving said operation values from said multiplication operating means as inputs;

an adder (75) for cumulatively adding said operation values from said first multiplexer;

FIFO means (74) for storing said operation value from said multiplication operating means via said first multiplexer and adder to supply the stored value to said first multiplexer;

output sampling means (71) for storing the intermediately-calculated value of said subband sample from said first adder;

a register (76) for storing said subband sample and matrixing value from said adder, supplying the finally-calculated matrixing value to said matrixing value processing means, and supplying said finally-calculated subband sample to said output means; and

a second multiplexer (72) for selecting the intermediately-calculated value from said output sampling means and register to supply the selected value to said adder.

6. A synthesis subband filter as claimed in claim 1, wherein said output means (60) is formed by a FIFO (61).

7. A synthesis subband filter as claimed in claim 1, wherein said multiple FIFO means (14) is formed by FIFOs (140,141... 171) connected in parallel as many as the number of said subband samples.

8. A synthesis subband filter as claimed in claim 1, wherein said multiple FIFO means (18) is formed by two FIFOs (181,182) connected in parallel to each other.

9. A synthesis subband filter as claimed in claim 4, wherein said output sampling means (54) is formed by registers (5400... 543.1) for respectively storing said intermediately-calculated values of said subband samples as many as the number of said subband samples.

10. A synthesis subband filter as claimed in claim 5, wherein said output sampling means (71) is formed by registers (5400... 5431) for respectively storing said intermediately-calculated values of said subband samples as many as the number of said subband samples.

11. A synthesis subband filter as claimed in claim 4, wherein said output sampling means (54) is formed by FIFO means (5432) for sequentially storing said intermediately-calculated values of said subband sample.

12. A synthesis subband filter as claimed in claim 5, wherein said output sampling means (71) is formed by FIFO means (5432) for sequentially storing said intermediately-calculated values of said subband sample.

**Patentansprüche**

1. Synthese-Teilbandfilter für einen MPEG-Audiosignaldekodierer, umfassend:

   ein Matrixwertverarbeitungsmittel (10), um einen verschobenen Matrixwert und einen Zuordnungswert mittels einer Eingangsteilbandabtastung und eines Matrixwertes zu erhalten,
   ein Konstantenspeichermittel (30), um einen Matrizen-Konstantwert und einen Operations-Konstantwert zu speichern,
   ein Multiplikationsoperationsmittel (40), um eine Multiplikationsoperation mittels Daten von dem Matrixwertverarbeitungsmittel und Daten von dem Konstantenspeichermittel durchzuführen,
   ein Additionsoperationsmittel (50), um die Operationswerte von dem Multiplikationsoperationsmittel kumulativ zu addieren, um den Matrixwert und eine Teilbandabtastung zu liefern,
   und ein Ausgabemittel (60), um die Teilbandabtastung von dem Additionsoperationsmittel zu liefern,

   **dadurch gekennzeichnet, dass**
   das Matrixwertverarbeitungsmittel (10) umfasst:

   einen ersten Multiplexer, um die Teilbandabtastung zu empfangen (11, 15),
   ein FIFO-Mittel (12, 17), um die Teilbandabtastung von dem ersten Multiplexer zu speichern und den ersten Multiplexer mit der gespeicherten Teilbandabtastung zu versorgen,
   einen zweiten Multiplexer (13, 16) um den Matrixwert von dem Additionsoperationsmittel zu empfangen
   und eine Mehrzahl an FIFO-Mitteln (14, 18), um den Matrixwert von dem zweiten Multiplexer zu speichern und das Multiplikationsoperationsmittel und den zweiten Multiplexer mit dem gespeicherten Matrixwert zu versorgen.

2. Synthese-Teilbandfilter nach Anspruch 1, worin das Konstantenspeichermittel (30) umfasst:

   einen ersten Zähler (31), um einen ersten Takt als einen Eingang zu zählen,
   einen zweiten Zähler (32), um einen zweiten Takt als einen Eingang zu zählen,
   ein erstes ROM (33), um den gespeicherten Matrizen-Konstantwert gemäß einer Ausgabe des ersten Zählers sequentiell zu liefern,
   ein zweites ROM (34), um den gespeicherten Operations-Konstantwert gemäß einer Ausgabe des zweiten Zählers sequentiell zu liefern
   und einen Multiplexer (35), um die Konstantenwerte von dem ersten und zweiten ROM selektiv zu liefern.

3. Synthese-Teilbandfilter nach Anspruch 1, worin das Multiplikationsoperationsmittel (40) umfasst:

   ein Multipliziermittel (41), um die Multiplikationsoperation mittels des Matrixwertes, des Zuordnungswertes und des Konstantenwertes von dem Matrixwertverarbeitungsmittel und dem Konstantenspeichermittel durchzuführen
   und ein Registermittel (42), um die Operationswerte von dem Multipliziermittel zu speichern.

4. Synthese-Teilbandfilter nach Anspruch 1, worin das Additionsoperationsmittel (50) umfasst:

   einen ersten Addierer (51), um die Operationswerte von dem Multiplikationsoperationsmittel kumulativ zu addieren,
   ein Register (52), um eine zwischenberechnete Operation von dem ersten Addierer zu speichern, den ersten Addierer mit dem Wert dieser zwischenberechneten Operation zu versorgen und das Matrixwertverarbeitungsmittel mit dem endberechneten Matrixwert zu versorgen,
   ein FIFO-Mittel (53), um den Operationswert von dem Multiplikationsoperationsmittel zu speichern,
   einen zweiten Addierer (56), um den Operationswert von dem FIFO-Mittel kumulativ zu addieren und das Ausgabemittel mit der fertig berechneten Teilbandabtastung zu versorgen,
   und ein Ausgabeabtastmittel (54), um einen zwischenberechneten Wert von der Teilbandabtastung von dem zweiten Addierer zu speichern.

5. Synthese-Teilbandfilter nach Anspruch 1, worin das Additionsoperationsmittel (70) umfasst:

   einen ersten Multiplexer (73), um die Operationswerte von dem Multiplikationsoperationsmittel als Eingaben zu empfangen,
   einen Addierer (75), um die Operationswerte von dem ersten Multiplexer kumulativ zu addieren,
   ein FIFO-Mittel (74), um den Operationswert von dem Multiplikationsoperationsmittel durch den ersten Multiplexer und den Addierer zu speichern und den ersten Multiplexer mit dem gespeicherten Wert zu versorgen,
   ein Ausgangsabtastungsmittel (71), um die zwischenberechneten Werte von der Teilbandabtastung von dem ersten Addierer zu speichern,
   ein Register (76), um die Teilbandabtastung und den Matrixwert von dem Addierer zu speichern, das Matrixwertverarbeitungsmittel mit dem endberechneten Matrixwert zu versorgen, und das Ausgabemittel mit der endberechneten Teilbandabtastung zu versorgen
   und einen zweiten Multiplexer (72), um den zwischenberechneten Wert von dem Ausgangsabtastungsmittel und Register auszuwählen, um den Addierer mit dem ausgewählten Wert zu versorgen.

6. Synthese-Teilbandfilter nach Anspruch 1, worin das Ausgabemittel (60) von einem FIFO (61) gebildet ist.

7. Synthese-Teilbandfilter nach Anspruch 1, worin die mehreren FIFO-Mittel (14) von den FIFOs (140, 141, ... 171) gebildet sind, die parallel miteinander verbunden sind, und zwar entsprechend der Anzahl der Teilbandabtastungen.

8. Synthese-Teilbandfilter nach Anspruch 1, worin die mehrfachen FIFO-Mittel (18) von zwei FIFOs (181, 182) gebildet sind, die parallel miteinander verbunden sind.

9. Synthese-Teilbandfilter nach Anspruch 4, worin das Ausgangsabtastungsmittel (54) von Registern (5400... 5431) gebildet ist, um die zwischenberechneten Werte der Teilbandabtastungen entsprechend der Zahl dieser Teilbandabtastungen zu speichern.

10. Synthese-Teilbandfilter nach Anspruch 5, worin das Ausgangsabtastungsmittel (71) von Registern (5400... 5431) gebildet ist, um die zwischenberechneten Werte der Teilbandabtastungen entsprechend der Zahl dieser Teilbandabtastungen zu speichern.

11. Synthese-Teilbandfilter nach Anspruch 4, worin das Ausgabeabtastungsmittel (54) von einem FIFO-Mittel (5432) gebildet ist, um die zwischenberechneten Werte der Teilbandabtastung zu speichern.

12. Synthese-Teilbandfilter nach Anspruch 5, worin das Ausgangsabtastungsmittel (71) von einem FIFO-Mittel (5432) gebildet ist, um die zwischenberechneten Werte der Teilbandabtastung sequentiell zu speichern.

**Revendications**

1. Filtre de synthèse en sous bandes pour un décodeur de signal audio MPEG, comprenant :

   - des moyens de traitement de valeur de matriçage (10) pour obtenir une valeur de matriçage décalée et une valeur de mappage au moyen d'un échantillon d'entrée de sous bandes et d'une valeur de matriçage ;
   - des moyens de stockage de constantes (30) pour stocker une valeur de constante de matriçage et une valeur de constante opérationnelle ;
   - des moyens de calcul de multiplication (40) pour exécuter une opération de multiplication au moyen de données provenant desdits moyens de traitement de valeur de matriçage et desdits moyens de stockage de constantes ;
   - des moyens de calcul d'addition (50) pour additionner cumulativement les valeurs des opérations provenant desdits moyens de calcul de multiplication afin de fournir ladite valeur de matriçage et un échantillon de sous bandes ; et
   - des moyens de sortie (60) pour fournir ledit échantillon de sous bandes provenant desdits moyens de calcul d'addition,

      **caractérisé en ce que**
   les moyens de traitement de valeur de matriçage (10) comprennent :

- un premier multiplexeur pour recevoir ledit échantillon de sous bandes (11, 15) ;
- des moyens premier entré, premier sorti, FIFO (12, 17) pour stocker ledit échantillon de sous bandes provenant dudit premier multiplexeur, et fournir l'échantillon de sous bandes stocké au dit premier multiplexeur ;
- un deuxième multiplexeur (13, 16) pour recevoir ladite valeur de matriçage provenant desdits moyens de calcul d'addition ; et
- une pluralité de moyens premier entré, premier sorti, FIFO (14, 18) pour stocker ladite valeur de matriçage provenant dudit deuxième multiplexeur, et fournir la valeur de matriçage stockée auxdits moyens de calcul de multiplication et au deuxième multiplexeur.

2. Filtre de synthèse en sous bandes selon la revendication 1, dans lequel lesdits moyens de stockage de constantes (30) comprennent :

- un premier compteur (31) pour compter en entrée une première horloge ;
- un deuxième compteur (32) pour compter en entrée une deuxième horloge ;
- une première mémoire à lecture seule ROM (33) pour fournir séquentiellement ladite valeur de constante de matriçage stockée selon une sortie dudit premier compteur ;
- une deuxième mémoire à lecture seule ROM (34) pour fournir séquentiellement ladite valeur de constante opérationnelle stockée selon une sortie dudit deuxième compteur ; et
- un multiplexeur (35) pour fournir sélectivement les valeurs de constantes desdites première et deuxième mémoires à lecture seule ROM.

3. Filtre de synthèse en sous bandes selon la revendication 1, dans lequel lesdits moyens de calcul de multiplication (40) comprennent :

- des moyens de multiplication (41) pour exécuter l'opération de multiplication au moyen de ladite valeur de matriçage, de ladite valeur de mappage et desdites valeurs de constantes provenant desdits moyens de traitement de valeur de matriçage et desdits moyens de stockage de constantes ; et
- des moyens de registre (42) pour stocker les valeurs d'opération provenant desdits moyens de multiplication.

4. Filtre de synthèse en sous bandes selon la revendication 1, dans lequel lesdits moyens de calcul d'addition (50) comprennent :

- un premier additionneur (51) pour additionner cumulativement ladite valeur d'opération provenant desdits moyens de calcul de multiplication ;
- un registre (52) pour stocker une opération d'un calcul intermédiaire provenant dudit premier additionneur, fournir ladite valeur d'opération de calcul intermédiaire au dit premier additionneur, et fournir la valeur de matriçage d'un calcul final auxdits moyens de traitement de valeur de matriçage ;
- des moyens premier entré, premier sorti, FIFO (53) pour stocker la valeur d'opération provenant desdits moyens de calcul de multiplication ;
- un deuxième additionneur (56) pour additionner cumulativement ladite valeur d'opération provenant desdits moyens premier entré, premier sorti FIFO, et fournir l'échantillon de sous bandes d'un calcul final auxdits moyens de sortie ; et
- des moyens d'échantillonnage de sortie (54) pour stocker une valeur d'un calcul intermédiaire dudit échantillon de sous bandes provenant dudit deuxième additionneur.

5. Filtre de synthèse en sous bandes selon la revendication 1, dans lequel lesdits moyens de calcul d'addition (70) comprennent :

- un premier multiplexeur (73) pour recevoir en entrées lesdites valeurs d'opération provenant desdits moyens de calcul de multiplication ;
- un additionneur (75) pour additionner cumulativement lesdites valeurs d'opération provenant dudit premier multiplexeur ;
- des moyens premier entrée, premier sorti FIFO (74) pour stocker ladite valeur d'opération provenant desdits moyens de calcul de multiplication via lesdits premier multiplexeur et additionneur afin de fournir la valeur stockée au dit premier multiplexeur ;
- des moyens d'échantillonnage de sortie (71) pour stocker la valeur d'un calcul intermédiaire dudit échantillon de sous bandes provenant dudit premier additionneur ;
- un registre (76) pour stocker ledit échantillon de sous bandes et ladite valeur de matriçage provenant dudit

13

additionneur, fournir la valeur de matriçage d'un calcul final auxdits moyens de traitement de valeur de matriçage, et fournir ledit échantillon de sous bandes d'un calcul final auxdits moyens de sortie ; et

- un deuxième multiplexeur (72) pour sélectionner la valeur d'un calcul intermédiaire provenant desdits moyens d'échantillonnage de sortie et dudit registre afin de fournir la valeur sélectionnée audit additionneur.

6. Filtre de synthèse en sous bandes selon la revendication 1, dans lequel lesdits moyens de sortie (60) sont formés par un registre premier entré, premier sorti FIFO (61).

7. Filtre de synthèse en sous bandes selon la revendication 1, dans lequel lesdits moyens premier entré, premier sorti FIFO multiples (14) sont formés par des FIFO (140, 141... 171) connectés en parallèle aussi nombreux que le nombre desdits échantillons de sous bandes.

8. Filtre de synthèse en sous bandes selon la revendication 1, dans lequel lesdits moyens premier entré, premier sorti FIFO multiples (18) sont formés par deux FIFO (181, 182) connectés entre eux en parallèle.

9. Filtre de synthèse en sous bandes selon la revendication 4, dans lequel lesdits moyens d'échantillonnage de sortie (54) sont formés par des registres (5400... 5431) pour stocker respectivement lesdites valeurs d'un calcul intermédiaire desdits échantillons de sous bandes aussi nombreux que le nombre desdits échantillons de sous bandes.

10. Filtre de synthèse en sous bandes selon la revendication 5, dans lequel lesdits moyens d'échantillonnage de sortie (71) sont formés par des registres (5400... 5431) pour stocker respectivement lesdites valeurs d'un calcul intermédiaire desdits échantillons de sous bandes aussi nombreux que le nombre desdits échantillons de sous bandes.

11. Filtre de synthèse en sous bandes selon la revendication 4, dans lequel lesdits moyens d'échantillonnage de sortie (54) sont formés par des moyens premier entré, premier sorti FIFO (5432) pour stocker séquentiellement lesdites valeurs d'un calcul intermédiaire dudit échantillon de sous bandes.

12. Filtre de synthèse en sous bandes selon la revendication 5, dans lequel lesdits moyens d'échantillonnage de sortie (71) sont formés par des moyens premier entré, premier sorti FIFO (5432) pour stocker séquentiellement lesdites valeurs d'un calcul intermédiaire dudit échantillon de sous bandes.

## FIG.1
## PRIOR ART

START

NEWLY—INPUT 32 SUBBAND SAMPLES
$Si(i=0, \cdots ,31)$ — 1

SHIFTING
$(i=1023 \text{ TO } 64)$
$V=[i]=V[i-64]$ — 2

MATRIXING
$(i=0 \text{ TO } 64)$ $V_i=\sum_{k=0}^{31} N_{ik} * S_k$ — 3

MAPPING
$(i=0 \text{ TO } 7, j=0 \text{ TO } 31)$
$U[i*64+j]=V[i*128+j]$
$U[i*64+32+i]=V[i*128+96+i]$ — 4

PERFORM OPERATION
$(i=0 \text{ TO } 511)$
$W_i=U_i * D_i$ — 5

CALCULATE 32 SAMPLES
$(j=0 \text{ TO } 31)$ $S_i=\sum_{i=0}^{15} W_{j+32i}$ — 6

OUTPUT 32PCM SAMPLES — 7

END

15

# FIG.2

EP 0 663 735 B1

FIG.3

## FIG.4a

## FIG.4b

# FIG.5a

5400

REGISTER S₀

LE s-o ————

OEs-o ————

5401

REGISTER S₀

LE s-1 ————

OEs-1 ————

TO ADDER 56,72

5431

REGISTER S31

LE s-31 ————

OEs-31 ————

FROM ADDER 56,75

# FIG.5b

5432

FROM ADDER 56,75 ————▶ FIFO  ╱25  ————▶ TO ADDER 56,72

## FIG.6a

11N

$S_{ni}$ → MATRIXING VALUE PROCESSOR #N  24

11(N−1)

$S_{(N-1)i}$ → MATRIXING VALUE PROCESSOR #N−1  24

112

$S_{2i}$ → MATRIXING VALUE PROCESSOR #2  24

111

$S_{1i}$ → MATRIXING VALUE PROCESSOR #1  24 →TO MULTIPLIER 41

FROM ADDER 51,75

## FIG.6b

25 → FIFO → DAC#1  51N

25 → FIFO → DAC#2  51(N1)

FROM ADDER 51,75 →

25 → FIFO → DAC#N−1  512

25 → FIFO → DAC#N  511